# EUROPEAN PATENT APPLICATION

(11) **EP 4 851 340 A1**
(43) Date of publication of application: **09.12.2026**
(21) Application number: 25210823.8
(22) Date of filing: 23.10.2025
(51) Int. Cl.: C25D 1/04, H01M 4/66, C25D 3/38

(54) **COPPER FOIL, AND ELECTRODE AND SECONDARY BATTERY INCLUDING THE SAME**

(30) Priority: 02.06.2025 KR 20250072190
(71) Applicant: SK Nexilis Co., Ltd., Jeollabuk-do 56137 (KR)
(72) Inventor: KIM, Seungmin, 03142 Seoul (KR); JIN, Shan Hua, 03142 Seoul (KR)
(74) Representative: Prüfer & Partner mbB Patentanwälte · Rechtsanwälte

(57) **Abstract**

Provided are a copper foil and an electrode and secondary battery including the same, the copper foil including a copper layer, wherein the copper foil satisfies conditions (1) to (3) below:
- Condition (1): A Rku (kurtosis) of the copper foil according to JIS B0601:2013 is 1.2 to 5.9.
- Condition (2): A hardness of the copper foil according to ISO 14577 is 0.8 GPa to 3.4 GPa.
- Condition (3): A texture coefficient [TC(311)] of a (311) plane of the copper layer at room temperature is 0.15 to 1.65.

## Description

### BACKGROUND OF THE DISCLOSURE

### Field of the Disclosure

The present disclosure relates to a copper foil and an electrode and secondary battery including the same.

### Description of the Related Art

A secondary battery, as an energy storage device, is widely used in various applications such as portable devices, electric vehicles, and energy storage systems (ESS). In particular, as high energy density and high power characteristics are simultaneously required, advanced technological development for the structures and constituent materials of electrodes is continuously ongoing.

Generally, a negative electrode is formed by applying a slurry composed of an active material, a binder, and a conductive agent onto a current collector, and then subjecting it to drying and roll-press processes. As the current collector, a copper foil, which has excellent electrical conductivity and is easy to process, is widely used.

Recently, as the demand for higher density and reduced thickness of electrodes has increased, design conditions such as an increase in the coating amount of an active material, an improvement in electrode density, and a reduction in electrode thickness are becoming progressively more advanced. Accordingly, various performance requirements such as mechanical durability, process adaptability, surface precision, and coating uniformity are being simultaneously imposed on copper foil.

In particular, during electrode manufacturing, the copper foil is repeatedly subjected to high-pressure roll press and the active material is repeatedly subjected to a compressive load, which may cause various process-related problems such as reduced mechanical stability, wrinkling, tearing, softening, and the generation of surface defects.

Therefore, as electrode manufacturing conditions become more advanced, research aimed at optimizing multifaceted characteristics of the copper foil, such as its thickness, crystal structure, surface roughness, chemical stability, and residual stress, is being actively conducted.

### SUMMARY OF THE DISCLOSURE

Therefore, the present disclosure has been made in view of the above problems, and it is one object of the present disclosure to provide a copper foil, and an electrode and a secondary battery including the same, wherein the copper foil has a thin thickness without being wrinkled and torn during manufacturing and use, thereby having improved mechanical properties and battery characteristics.

In accordance with an aspect of the present disclosure, the above and other objects can be accomplished by the provision of a copper foil, including a copper layer, wherein the copper foil satisfies conditions (1) to (3) below:
- Condition (1): The Rku (kurtosis) of the copper foil according to JIS B0601:2013 is 1.2 to 5.9.
- Condition (2): The hardness of the copper foil according to ISO 14577 is 0.8 GPa to 3.4 GPa.
- Condition (3): The texture coefficient [TC(311)] of a (311) plane of the copper layer at room temperature is 0.15 to 1.65.

In an embodiment of the present disclosure, the copper foil may include a first surface and a second surface opposite to the first surface, wherein an Rku difference according to Equation 1 below is 1 or less: $Rku difference = \left|First Rku-Second Rku\right|$ where the first Rku is an Rku of the first surface, and the second Rku is an Rku of the second surface.

In an embodiment of the present disclosure, the amount of chromium (Cr) electrodeposited on the surface of the copper foil may be 1.2 mg/m² to 4.2 mg/m².

In an embodiment of the present disclosure, the copper foil may have a yield strength of 23 kgf/mm² to 57 kgf/mm² measured at room temperature according to IPC-TM-650.

In an embodiment of the present disclosure, the copper foil may have an elongation of 3 % to 18 % measured at room temperature according to IPC-TM-650.

In an embodiment of the present disclosure, the copper foil may have a Resistance Index (RI) of 70 to 150 according to Equation 2 below: $RI \left(unit omitted\right) = Yield strength \left(kgf/{mm}^{2}\right) \times Elongation \left(%\right)$

In an embodiment of the present disclosure, the copper foil may have a tensile strength of 29 kgf/mm² to 65 kgf/mm² at room temperature according to IPC-TM-650.

In an embodiment of the present disclosure, the copper foil may include a protective layer formed on at least one surface of the copper layer, wherein the protective layer includes at least one of a chromium compound, a silane compound, and a nitrogen compound.

In an embodiment of the present disclosure, the copper foil may have a thickness of 3 *µ*m to 20 *µ*m.

In accordance with another aspect of the present disclosure, there is provided an electrode, including: a current collector including a copper foil; and an active material layer formed on at least one surface of the current collector, wherein the copper foil includes a copper layer, and satisfies conditions (1) to (3) below:
- Condition (1): A Rku (kurtosis) of the copper foil according to JIS B0601:2013 is 1.2 to 5.9.
- Condition (2): A hardness of the copper foil according to ISO 14577 is 0.8 GPa to 3.4 GPa.
- Condition (3): A texture coefficient [TC(311)] of a (311) plane of the copper layer at room temperature is 0.15 to 1.65.

In an embodiment of the present disclosure, a ratio of the thickness of the current collector to the total thickness of the electrode may be 1 % to 12 %.

In accordance with yet another aspect of the present disclosure, there is provided a secondary battery, including: a negative electrode; a positive electrode; an electrolyte; and a separator interposed between the negative electrode and positive electrode, wherein the negative electrode includes a current collector including a copper foil, wherein the copper foil includes a copper layer, and satisfies conditions (1) to (3) below:
- Condition (1): A Rku (kurtosis) of the copper foil according to JIS B0601:2013 is 1.2 to 5.9.
- Condition (2): A hardness of the copper foil according to ISO 14577 is 0.8 GPa to 3.4 GPa.
- Condition (3): A texture coefficient [TC(311)] of a (311) plane of the copper layer at room temperature is 0.15 to 1.65.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates the sectional view of a copper foil according to an embodiment;
FIG. 2 schematically illustrates a conceptual diagram for explaining Rku;
FIG. 3 illustrates an exemplary XRD graph of a copper foil;
FIG. 4 schematically illustrates the sectional view of a negative electrode according to an embodiment;
FIG. 5 schematically illustrates the sectional view of a secondary battery according to an embodiment; and
FIG. 6 schematically illustrates an apparatus for manufacturing a copper foil according to an embodiment.

### DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the specification, when a certain part "includes" a certain component, this indicates that the part may further include another component instead of excluding another component unless there is no different disclosure. In addition, it should be understood that all numerical ranges representing physical property values, dimensions, etc. of components described in the present specification or application are modified by the term 'about' in all cases unless otherwise specified. Further, in the present specification or application, 'ppm' means on a weight basis. Additionally, in the present specification or application, 'derived' means to indicate a component or structure originating from a certain substance, or the substance itself.

In addition, in the present specification or application, terms such as "below," "beneath," "lower," "above," and "upper" may be used to easily describe the correlation between one element or component and another, as illustrated in the drawings. The spatially relative terms should be understood as terms that include different orientations of a device during use or operation, in addition to the orientation shown in the drawings. For example, when a device shown in the drawings is turned over, a device described as "below" or "beneath" another device may be placed "above" the other device. Accordingly, the exemplary term "below" or "beneath" may encompass both orientations of below and above. Likewise, the exemplary term "above" or "upper" may encompass both orientations of above and below.

Hereinafter, a copper foil according to the present disclosure and an electrode and secondary battery including the copper foil are described.

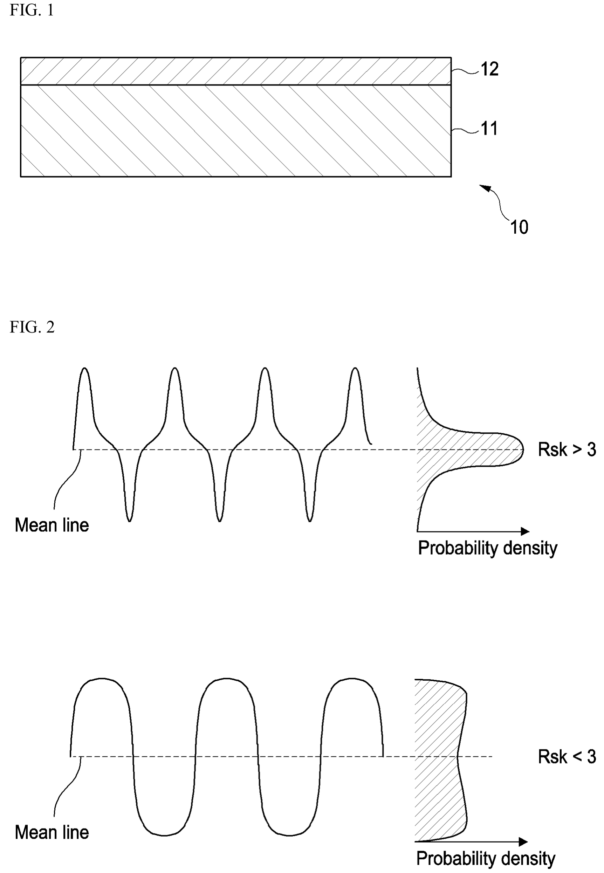

FIG. 1 schematically illustrates the sectional view of a copper foil according to an embodiment.

The copper foil 10 according to the present disclosure may include a copper layer 11. The copper layer 11 may include 99 % by weight or more, 99.3 % by weight or more, 99.6 % by weight or more, or 99.9 % by weight or more of copper (Cu).

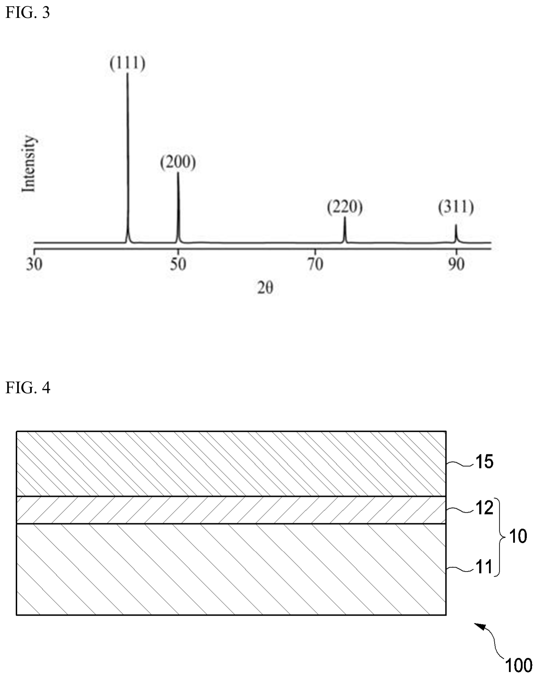

The copper layer 11 may be formed on a rotating cathode drum through electroplating. The copper layer 11 may have a shiny side that is in direct contact with the rotating cathode drum in the electroplating process, and a matte side opposite to the shiny side. Specifically, the copper layer 11 may be formed by an apparatus for manufacturing a copper foil of FIG. 4, which will be described below.

The copper foil 10 may include a protective layer 12 formed on at least one surface of the copper layer 11. The protective layer 12 formed on one surface of the copper layer 11 is illustrated in FIG. 1, but the protective layer 12 may be formed on both surfaces of the copper layer 11.

The protective layer 12 may include at least one of a chromium compound, a silane compound, and a nitrogen compound. The protective layer 12 may prevent the oxidation and corrosion of the copper layer 11 and improve heat resistance thereof, thereby extending the lifespan of the copper foil 10 and the lifespan of a product including the copper foil 10.

The copper foil 10 may satisfy conditions (1) to (3) below:
- Condition (1): The Rku (kurtosis) of the copper foil according to JIS B0601:2013 is 1.2 to 5.9.
- Condition (2): The hardness of the copper foil according to ISO 14577 is 0.8 GPa to 3.4 GPa.
- Condition (3): The texture coefficient [TC(311)] of a (311) plane of the copper layer at room temperature is 0.15 to 1.65.

FIG. 2 schematically illustrates a conceptual diagram for explaining Rku.

The Rku is an index indicated by non-dimensionalizing the fourth power average of a surface height based on a mean line by the fourth power of the root mean square value of a surface roughness. The Rku represents the sharpness or peakedness of the surface height distribution, and the closer the Rku is to 3, the closer the surface height distribution is to a normal distribution. Referring to FIG. 2, when the Rku in the copper foil 10 is greater than 3, it may be interpreted that the surface height distribution is sharply concentrated at the center and has a surface with protrusions or deep irregularities. On the other hand, when the Rku in the copper foil 10 is less than 3, it may be interpreted that the surface height distribution is gently spread and has a flat surface with relatively few protrusions and irregularities.

The Rku is obtained by a method compliant with JIS B0601:2013. To acquire the raw data for Rku calculation, a surface profilometer equipped with a stylus probe is used. The stylus, having a tip radius and specified measurement force, is scanned across the sample surface under controlled conditions including scan speed, sampling interval, and measurement length. Prior to measurement, the specimen surface is prepared through cleaning and, if necessary, polishing to ensure accurate data acquisition. Environmental factors such as temperature and humidity are maintained within specified limits during measurement. The raw surface profile data, representing the height variations of the surface, are recorded and processed to remove noise and artifacts according to standardized filtering procedures. Following the data acquisition and filtering, the Rku parameter is calculated using the formula and method defined in JIS B0601:2013, which provides a quantitative measure of the surface's asymmetry or Kurtosis.

The Rku may be controlled according to the content of a leveling agent to be described below. The Rku may be controlled according to the content of N-isopropylacrylamide (NIPA) as the leveling agent to be described below.

The Rku may be calculated using a roughness tester from Mitsutoyo Corp. in accordance with JIS B0601:2013. The Rku may be 1.2 to 5.9, 1.3 to 5.9, 1.3 to 5.8, or 1.5 to 5.8. When the range is satisfied, the concentration of the protrusion profile on the surface of the copper foil 10 may be appropriately controlled, so that defects such as wrinkles and/or tearing that may occur during slip or roll contact in the manufacturing process of the copper foil 10 may be suppressed.

The hardness of the copper foil 10 may be measured according to the following measurement conditions based on ISO 14577:

### [Measurement conditions]

- Measurement equipment: Nano Indenter G200 from Agilent Technologies Corp.
- Surface approach velocity (nm/S): 10
- Depth limit (nm): 1000
- Strain rate target (1/S): 0.05
- Frequency target (Hz): 45

The hardness may be an index of the mechanical bonding stability between the copper foil 10 and the active material layer. The hardness may be a process suitability index for determining whether the surface of the copper foil 10 can withstand an active material-coating process and a rolling process without wrinkles or damage. In addition, the hardness may be a durability index indicating whether the copper foil 10 can maintain stability without mechanical failure against loads such as tension and compression during the manufacturing process of a secondary battery.

The hardness may be controlled by the buffing speed of a rotating cathode drum to be described below. The hardness may be 0.8 GPa to 3.4 GPa, 0.9 GPa to 3.4 GPa, 1.0 GPa to 3.4 GPa, or 1.2 GPa to 3.4 GPa. When the range is satisfied, the mechanical rigidity of the copper foil 10 may be stably secured in accordance with process suitability. In addition, since the copper foil 10 is not excessively stretched, the occurrence of wrinkles due to local pressure during the manufacturing process may be prevented, and even in a situation (tension hunting) where the tensile load is not constant and fluctuates irregularly, the copper foil 10 may react flexibly, so that the tensile force may be evenly distributed without fracture.

At room temperature, the texture coefficient [TC(311)] of the (311) plane of the copper layer 11 may be 0.15 to 1.65.

FIG. 3 exemplarily illustrates an XRD graph of a copper foil. Referring to FIG. 3, the texture coefficients of crystal planes in each of the copper layer 11 included in the copper foil 10 may be measured and calculated. Specifically, the texture coefficient of the (311) plane of each of the copper layer 11 may be measured and calculated as follows. An XRD graph having peaks corresponding to n crystal planes is obtained by X-ray diffraction analysis (XRD) [target: copper K alpha 1, 20 interval: 0.01°, 20 scan speed: 3°/min] in a diffraction angle (20) range of 30° to 95°. As illustrated in FIG. 3, an XRD graph may be obtained in which peaks corresponding to a (111) plane, a (200) plane, a (311) plane, and a (311) plane appear. Next, the XRD diffraction intensity [I(hkl)] of each crystal plane (hkl) is obtained from the graph. In addition, an XRD diffraction intensity [I0(hkl)] is obtained according to a value presented in JCPDS 04-0836 of the regulations by the Joint Committee on Powder Diffraction Standards (JCPDS). Four crystal plane values were measured and applied to obtain the texture coefficient [TC(220)] value of the (311) plane of each of the copper layer 11. In the following equation, (hkl) corresponds to a (111) plane, a (200) plane, a (311) plane, and a (311) plane.

Specifically, the texture coefficient [TC(311)] of the (311) plane of the copper layer 11 is calculated according to an equation below: $TC \left(hkl\right) = \frac{I \left(311\right) / {I}_{0} \left(311\right)}{\frac{1}{N} {\sum }_{i = 1}^{N} I {\left(hkl\right)}_{i} / {I}_{0} {\left(hkl\right)}_{i}}$

The texture coefficient [TC(311)] may be 0.15 to 1.65, 0.18 to 1.65, 0.20 to 1.65, or 0.25 to 1.60. When the range is satisfied, the crystal structure of the copper foil 10 may have an appropriate denseness, so that wrinkling and tearing of the copper foil 10, which may be induced by stress and heat in a secondary battery manufacturing process, may be suppressed. When the range is satisfied, a crystal orientation in the copper foil 10 is controlled, so that mechanical flexibility and a stress dispersion capability may be secured in a balanced manner. In addition, dislocation movement between crystal grains is possible, which is effective for local stress dispersion, and excessive hardening of the crystal structure is prevented, so that a tearing phenomenon during a roll-to-roll process may be prevented.

The conditions (1) to (3) are indices representing the structural characteristics (the Rku, texture coefficient [TC(311)]) and mechanical properties (the hardness) of the surface of the copper foil 10, and these indices are interconnected so that the stability of the manufacturing processes of the copper foil 10 and the electrode may be improved.

The copper foil 10 may include a first surface and a second surface opposite to the first surface, and an Rku difference according to Equation 1 below may be 1 or less, 0.9 or less, 0.8 or less, or 0.7 or less: $Rku difference = \left|First Rku-Second Rku\right|$ where the first Rku is the Rku of the first surface, and the second Rku is the Rku of the second surface.

Since the asymmetry in the concentration of surface protrusions (Rku) between the first surface and second surface of the copper foil 10 is minimized, a difference in the mechanical response characteristics between the two surfaces may be suppressed. Accordingly, a phenomenon, in which local stress is concentrated in one direction or asymmetric deformation occurs, in the copper foil 10 during a roll-to-roll type- manufacturing process of a secondary battery or a coating and rolling process of an active material may be suppressed. As a result, the possibility of the occurrence of defects such as wrinkle formation or tearing may be reduced. In addition, since the roughness characteristics between both surfaces of the copper foil 10 are uniformly maintained, the adhesion force and coating uniformity in the active material-coating process may be improved.

The amount of chromium (Cr) electrodeposited on the surface of the copper foil may be 1.2 mg/m² to 4.2 mg/m², 1.3 mg/m² to 4.2 mg/m², 1.3 mg/m² to 4.0 mg/m², or 1.3 mg/m² to 3.8 mg/m². When the range is satisfied, the number of active sites, which may be chemically bonded with the active material, on the surface of the copper foil 10 may be appropriately controlled, so that the binding force between the copper layer 11 and the protective layer 12 is relatively reduced, the adhesion force between the copper foil 10 and the active material layer may be improved.

The amount of chromium electrodeposited on the copper foil 10 may be measured by Atomic Absorption Spectrometry (AAS). The amount of electrodeposited chromium may be an index indicating the number of active sites, which may be chemically bonded with the active material, on the surface of the copper foil 10.

The copper foil 10 may have a tensile strength of 29 kgf/mm² to 65 kgf/mm², 30 kgf/mm² to 65 kgf/mm², 35 kgf/mm² to 65 kgf/mm², or 45 kgf/mm² to 65 kgf/mm² at room temperature according to IPC-TM-650.

The tensile strength of the copper foil 10 may be measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard. When the range is satisfied, the mechanical damage such as wrinkles, tearing, and fracture of the copper foil 10 in the active material layer forming process may be prevented. In addition, the adhesion of the copper foil 10 may be maintained at an interface with the active material layer, and stress concentration may be dispersed to reduce electrical contact resistance.

The yield strength of the copper foil 10 measured at room temperature according to IPC-TM-650 may be 23 kgf/mm² to 57 kgf/mm², 24 kgf/mm² to 57 kgf/mm², 25 kgf/mm² to 57 kgf/mm², or 26 kgf/mm² to 57 kgf/mm².

The elongation of the copper foil 10 at room temperature according to IPC-TM-650 may be 3 % to 18 %, 4 % to 15 %, 4.4 % to 15 %, 4.4 % to 14.8 %, or 4.4 % to 14.5 %.

The yield strength and elongation of the copper foil 10 may be measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard. When the range is satisfied, the elastic and plastic stability of the copper foil 10 against mechanical loads such as tension, compression, and bending during the active material layer-forming process of the secondary battery may be improved, so that the occurrence of damage such as wrinkles, tears, and fractures may be prevented.

The copper foil 10 may have a Resistance Index (RI) of 70 to 150 according to Equation 2 below: $RI \left(unit omitted\right) = Yield strength \left(kgf/{mm}^{2}\right) \times Elongation \left(%\right)$

The RI is an index for the copper foil 10 by which the mechanical stress and flexibility of the copper foil 10 can be evaluated based on the yield strength and the elongation.

The RI may be 70 to 150, 72 to 150, 75 to 150, or 75 to 145. When the range is satisfied, defects such as wrinkles and/or tearing that may occur during slip or roll contact in the manufacturing process of the copper foil 10 may be suppressed.

The thickness of the copper foil 10 may be 3 *µ*m to 20 *µ*m, 4 *µ*m to 20 *µ*m, 4 *µ*m to 18 *µ*m, or 4 *µ*m to 15 *µ*m. When the range is satisfied, the manufacturing process efficiency of a secondary battery may be improved, and it may be possible to achieve a high capacity for the secondary battery.

FIG. 4 schematically illustrates the sectional view of a negative electrode according to an embodiment.

An electrode according to the present disclosure may include a current collector including the copper foil 10, and an active material layer formed on at least one surface of the current collector.

The electrode may be a negative electrode 100. The active material layer may be a negative electrode active material layer 15.

The copper foil 10 may include a copper layer 11, and may satisfy conditions (1) to (3) below:
- Condition (1): The Rku (kurtosis) of the copper foil according to JIS B0601:2013 is 1.2 to 5.9.
- Condition (2): The hardness of the copper foil according to ISO 14577 is 0.8 GPa to 3.4 GPa.
- Condition (3): The texture coefficient [TC(311)] of a (311) plane of the copper layer at room temperature is 0.15 to 1.65.

The copper foil 10 may include a protective layer 12 formed on at least one surface of the copper layer 11. The copper foil, the copper layer, the protective layer, and the conditions (1) to (3) may be the same as the copper foil, copper layer, protective layer, and conditions (1) to (3) described above.

In FIG. 4, the protective layer 12 and negative electrode active material layer 15 formed on one surface of the copper layer 11 are illustrated, but the protective layer 12 and the negative electrode active material layer 15 may be formed on both surfaces of the copper layer 11.

A ratio of the thickness of the current collector to the total thickness of the electrode may be 1 % to 12 %, 3 % to 12 %, 5 % to 12 %, or 6 % to 12 %. When the range is satisfied, the mechanical support of the negative electrode active material layer 15 may be maintained, and energy density may be improved.

The negative electrode active material layer 15 may include a negative electrode active material.

The type of the negative electrode active material is not particularly limited, and a compound capable of reversible intercalation and deintercalation of lithium may typically be used. For example, carbonaceous materials such as artificial graphite, natural graphite, graphitized carbon fiber, amorphous carbon, and highly crystalline carbon; or metallic compounds capable of alloying with lithium such as Si, Al, Sn, Pb, Zn, Bi, In, Mg, Ga, Cd, a Si alloy, a Sn alloy, or an Al alloy may be used. Examples of low-crystalline carbon may include soft carbon and hard carbon, and examples of high-crystalline carbon may include high-temperature fired carbons such as natural graphite, kish graphite, pyrolytic carbon, mesophase pitch based carbon fiber, meso-carbon microbeads, mesophase pitches, and petroleum or coal tar pitch derived cokes. As the negative electrode active material, a composite including a metallic compound and a carbonaceous material may be used as needed.

The negative electrode active material may be mixed with a binder and a conductive agent to be formed as the negative electrode active material layer 15.

The binder may improve the binding force between the negative electrode active material and a conductive agent, and may improve the binding force between the negative electrode active material layer 15 and the copper foil 10.

The type of binder is not particularly limited, but for example, polyvinylidene fluoride (PVDF), polytetrafluoroethylene (PTFE), fluorine rubber, styrene-butadiene rubber (SBR), cellulose-based resin, and the like may be used.

The conductive agent may improve the conductivity of the negative electrode active material. The type of conductive agent is not particularly limited, but for example, Super-P, graphite, acetylene black, and the like may be used.

The electrode may include a primer layer disposed between the copper foil 10 and the negative electrode active material layer 15.

The primer layer may improve the interfacial adhesion between the copper foil 10 and the negative electrode active material layer 15.

The primer layer may include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

The primer layer may include a binder. The binder may include at least one selected from the group consisting of styrene-butadiene rubber, polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorine rubber, styrene (styrene monomer: SM), butadiene (BD), and butyl acrylate (BA).

The primer layer may include at least one conductive agent selected from the group consisting of natural graphite, artificial graphite, carbon black, acetylene black, Ketjen black, channel black, furnace black, lamp black, thermal black, carbon fiber, metal fiber, fluorocarbon, aluminum powder, nickel powder, zinc oxide, potassium titanate, titanium oxide, and polyphenylene derivatives to improve conductivity.

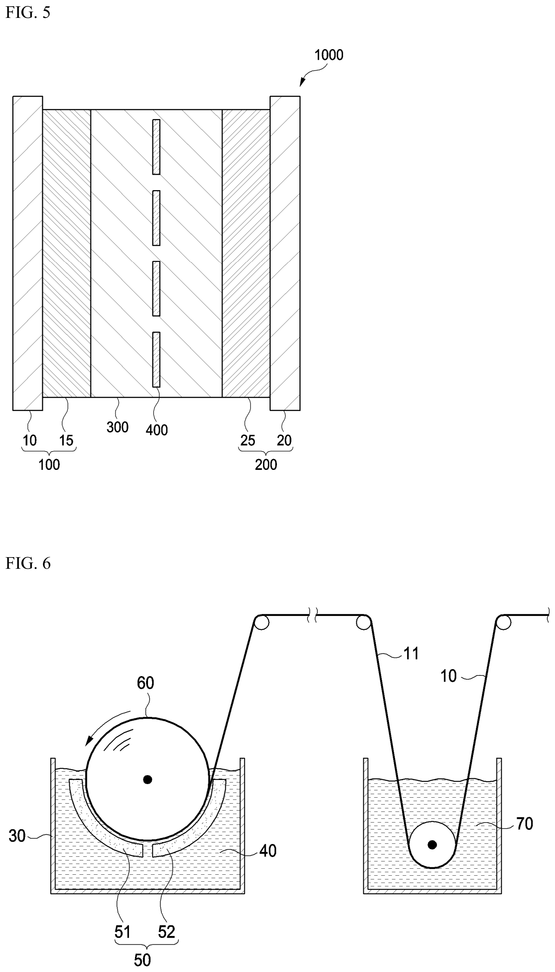

FIG. 5 schematically illustrates the sectional view of a secondary battery according to an embodiment.

The secondary battery 1000 according to the present disclosure may include a negative electrode 100, a positive electrode 200, an electrolyte 300, and a separator 400 interposed between the negative electrode 100 and the positive electrode 200, the negative electrode 100 may include a current collector including the copper foil 10, and the copper foil 10 may include a copper layer and satisfy the following conditions (1) to (3):
- Condition (1): The Rku (kurtosis) of the copper foil according to JIS B0601:2013 is 1.2 to 5.9.
- Condition (2): The hardness of the copper foil according to ISO 14577 is 0.8 GPa to 3.4 GPa.
- Condition (3): The texture coefficient [TC(311)] of a (311) plane of the copper layer at room temperature is 0.15 to 1.65.

The negative electrode 100 and the conditions (1) to (3) may be the same as the negative electrode and conditions (1) to (3) described above.

The positive electrode 200 may include a structure in which a positive electrode active material layer 25 is formed on a positive electrode current collector 20.

The positive electrode 200 may be manufactured by a general method known in the art. For example, the positive electrode 200 may be manufactured by preparing a slurry by mixing and stirring a positive electrode active material, a solvent, a binder, a conductive agent, and a dispersant, and then applying the slurry onto the positive electrode current collector 20, compressing, and drying.

The positive electrode current collector 20 is a metal with high conductivity and is not particularly limited as long as it is a metal to which the slurry of the positive electrode active material can easily adhere and which has high conductivity without causing a chemical change in the secondary battery. For example, stainless steel, aluminum, nickel, titanium, sintered carbon, or a surface-treated material thereof with carbon, nickel, titanium, silver, or the like on the surface of aluminum or stainless steel may be used. In addition, fine irregularities may be formed on the surface of the positive electrode current collector to increase the adhesion of the positive electrode active material. The positive electrode current collector 20 may be used in various forms such as a film, a sheet, a foil, a net, a porous body, a foam, and a non-woven fabric body, and may have a thickness of 3 µm to 500 µm.

The positive electrode active material is a compound capable of reversible intercalation and deintercalation of lithium, and specifically, may include a lithium composite metal oxide including lithium and at least one metal such as cobalt, manganese, nickel, or aluminum.

The electrolyte 300 may be a non-aqueous electrolyte. The electrolyte 300 may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

The separator 400 may be configured to prevent an electrical short circuit between the negative electrode 100 and the positive electrode 200 and to allow a flow of ions. The separator 400 may include a porous polymer film or a porous non-woven fabric. Here, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the present disclosure is not limited thereto, and according to an embodiment, the separator may be a high-heat-resistance separator including ceramic (CCS; Ceramic Coated Separator).

A contact angle between the negative electrode 100 and the electrolyte 300 may be 50° or less, 45° or less, 40° or less, or 10° to 50°. The contact angle may be measured according to ASTM D7334. When the range is satisfied, the surface wettability of the negative electrode 100 is excellent, so that the uniformity of a Solid Electrolyte Interphase (SEI) layer may be improved, and the initial power characteristics and life stability of the secondary battery 1000 may be improved.

FIG. 6 schematically illustrates an apparatus for manufacturing a copper foil according to an embodiment.

The copper foil 10 according to the present disclosure may be manufactured by the apparatus for manufacturing a copper foil.

The method of manufacturing the copper foil 10 may include a step of forming the copper layer 11 and a step of forming a protective layer 12 on the copper layer 11.

The apparatus for manufacturing the copper foil 10 may include an electrolytic bath 30 for containing an electrolyte solution 40, a positive electrode plate 50 including a first positive electrode plate 51 and a second positive electrode plate 52, and a rotating cathode drum 60.

The first positive electrode plate 51 and the second positive electrode plate 52 may be electrically insulated from each other.

The formation of the copper layer 11 may be carried out by forming a seed layer through energization between the first positive electrode plate 51 and the rotating cathode drum 60, and growing the seed layer through energization between the second positive electrode plate 52 and the rotating cathode drum 60.

A current density provided by each of the first positive electrode plate 51 and the second positive electrode plate 52 may be 40 ASD to 130 ASD, 45 ASD to 130 ASD, 45 ASD to 125 ASD, or 45 ASD to 120 ASD. When the range is satisfied, defects such as wrinkles and/or tearing that may occur during slip or roll contact in the manufacturing process of the copper foil 10 may be suppressed.

The surface characteristics of the copper layer 11 and the copper foil 10, which includes the copper layer 11, may be controlled according to the surface buffing or polishing conditions of the rotating cathode drum 60.

The surface of the rotating cathode drum 60 may be polished with a polishing brush having a grit of #600 to #3000, #700 to #3000, #700 to #2500, or #800 to #2000.

The surface of the rotating cathode drum 60 may be polished by a buffing pressure of 0.5 ampere to 5 ampere, 0.6 ampere to 5 ampere, 0.6 ampere to 4.8 ampere, or 0.6 ampere to 4.5 ampere.

The surface of the rotating cathode drum 60 may be polished by a vibration speed of 50 cpm (cycles per minute) to 250 cpm, 50 cpm to 250 cpm, 50 cpm to 250 cpm, or 50 cpm to 250 cpm.

The surface of the rotating cathode drum 60 may be polished by a buffing speed of 150 rpm (rotation per minute) to 350 rpm, 160 rpm to 350 rpm, 160 rpm to 340 rpm, or 160 rpm to 330 rpm.

The dynamic coefficient of friction of the copper foil 10 may be controlled by controlling the grit of the polishing brush, a buffing pressure, a buffing speed, and a vibration speed.

When the buffing speed is within the above range, the hardness of the copper foil 10 may be controlled to be in the range of 0.8 GPa to 3.4 Gpa of the condition (2).

In the process of forming the copper layer 11, the temperature of the electrolyte solution 40 may be maintained at 45 °C to 65 °C, 47 °C to 65 °C, 47 °C to 63 °C, or 47 °C to 60 °C. Depending on the temperature of the electrolyte solution 40, the size, crystal orientation, and electrodeposition rate of copper crystal grains may vary, and thereby mechanical properties and surface roughness may be controlled.

When the range is satisfied, the Rsk of the copper foil 10 may be controlled to be in the range of -0.92 to 0.77, and the dynamic coefficient of friction of the copper foil 10 may be controlled to be in the range of 0.06 to 0.17.

The electrolyte solution 40 may include copper ions, an inorganic acid, and an additive. The electrolyte solution 40 may include chlorine. The inorganic acid may include sulfuric acid.

The content of the copper ions in the electrolyte solution 40 may be 70 g/L to 150 g/L, 70 g/L to 110 g/L, 70 g/L to 100 g/L, or 70 g/L to 90 g/L.

The copper ions contained in the electrolyte solution 40 may be from a copper wire with a purity of 99.9% or more, which is pickled in 10% sulfuric acid for 10 to 20 minutes and then undergoes a water washing process with distilled water. The water washing process may prevent the pickled organic matter from entering the electrolyte solution 40. The concentration of the organic matter may be controlled by a filtration process using a medium such as diatomaceous earth or carbon.

The content of the sulfuric acid in the electrolyte solution 40 may be 80 to 130 g/L, 85 to 130 g/L, 90 to 130 g/L, or 90 to 125 g/L.

The chlorine may include chlorine ions and chlorine atoms. The chlorine may be used to remove silver (Ag) ions that have entered the electrolyte solution 40 during the process of forming the copper layer 11. The chlorine may precipitate the silver ions in the form of silver chloride (AgCl). The silver chloride may be removed by filtration.

The concentration of the chlorine may be 15 ppm to 30 ppm. When the range is satisfied, the removal of silver ions may be smoothly performed, and unnecessary reactions due to excess chlorine may be suppressed.

The additive may include a leveling agent. The leveling agent may include N-isopropylacrylamide (NIPA).

The Rku of the copper foil 10 may be controlled according to the concentration of the NIPA. The NIPA is an acrylic polymer including a hydrophilic amide group, may be stably present in the electrolyte solution 40, and may be selectively adsorbed on the surface of the copper layer 11. As the NIPA is selectively adsorbed on the surface of the copper layer 11, a local growth rate and protrusion pattern of the copper layer 11 may be controlled. By the NIPA, a reduction reaction of copper ions on the surface of the copper layer 11 is finely controlled, whereby the Rku value may be controlled.

When the content of the NIPA is increased, the formation of surface protrusions is suppressed, so the Rku may be lowered, and the surface profile may show a gentle tendency.

When the content of the NIPA is decreased, the formation of protrusions is relatively promoted, so the Rku may be increased.

The concentration of the NIPA may be 1 ppm to 10 ppm, 1 ppm to 9 ppm, 1 ppm to 8 ppm, or 1 ppm to 7 ppm. Within this range, the Rku of the copper foil 10 may be controlled to be in the range of 1.2 to 5.9 of the condition (1).

The additive may include a first additive that may impart a surface gloss, stress reduction, and leveling function to the copper layer 11.

The charge amount of the electrolyte solution 40 may be increased by the first additive, so that the electrodeposition speed of the copper ions may increase, the curl characteristics of the manufactured copper foil 10 may be improved, and the gloss of the copper foil 10 may be improved.

The concentration of the first additive may be 1 ppm to 20 ppm, 2 ppm to 20 ppm, 3 ppm to 20 ppm, or 3 ppm to 18 ppm. When the range is satisfied, the surface roughness of the manufactured copper foil 10 may be maintained, and the gloss may be improved.

The first additive may include sulfonic acid or a metal salt thereof.

The first additive may include at least one of bis-(3-sulfopropyl)-disulfide disodium salt, diethylenetriaminepenta(methylenesulfonic acid), 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The additive may include a second additive that can provide functions of relaxing the deposition rate of the copper layer 11 and improving the uniformity thereof.

The second additive may prevent a sharp increase in roughness of the copper layer 11 and a decrease in strength thereof.

The concentration of the second additive may be 0.1 ppm to 20 ppm, 0.1 ppm to 15 ppm, 0.1 ppm to 12 ppm, or 1 ppm to 10 ppm. When the range is satisfied, the manufactured copper foil 10 may be prevented from being wrinkled and torn, and its appearance, gloss, strength, and elongation properties may be maintained.

The second additive may include a non-ionic water-soluble polymer. The second additive may include at least one of polyethylene glycol, polypropylene glycol, hydroxyethyl cellulose, polyethylene-polypropylene copolymers, polyglycerin, polyethylene glycol dimethyl ether, stearic acid polyglycol ether, and stearyl alcohol polyglycol ether.

The additive may include a third additive which can prevent electrodeposition clogging in a fine pattern of the copper layer 11, thereby maintaining flatness.

By the third additive, electrodeposition is suppressed in areas of the copper layer 11 where the local current density is high, whereby a leveling action that flattens the surface of the copper layer 11 may be performed.

The concentration of the third additive may be 1 ppm to 20 ppm, 1 ppm to 10 ppm, or 1 ppm to 9 ppm. When the range is satisfied, the surface gloss of the manufactured copper foil 10 is uniform, and the phenomenon of a rapid increase in surface roughness may be suppressed.

The third additive may include a nitrogen-containing heterocyclic quaternary ammonium salt or its derivative.

The third additive may include at least one of compounds represented by Formulas 1 to 5 below:

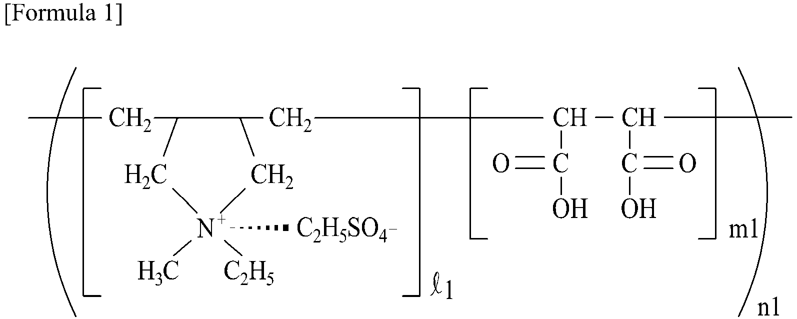

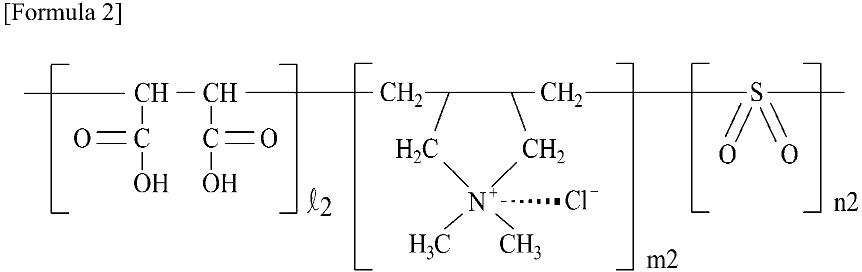

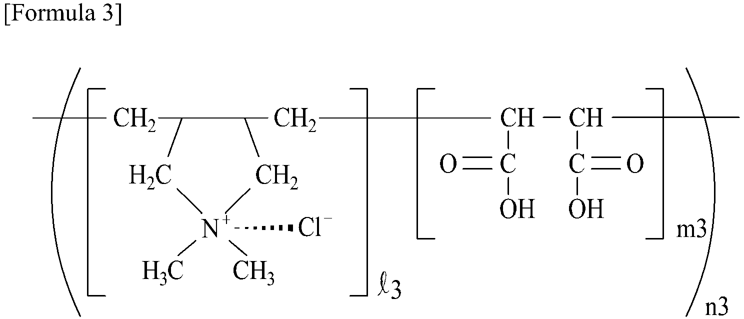

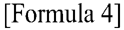

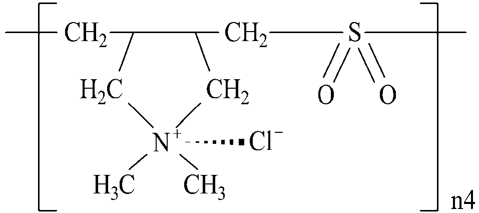

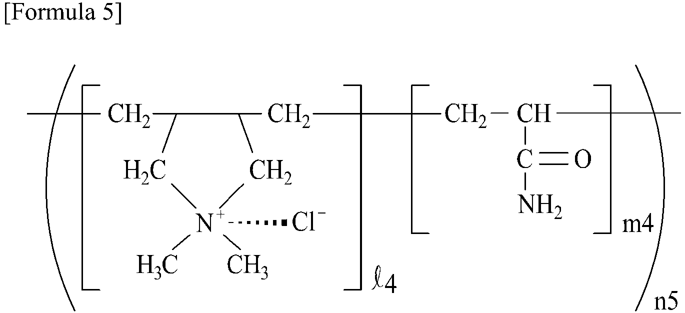

In Formulas 1 to 5, ℓ1 to ℓ4, m1 to m4, and n1 to n5 each represent a repeating unit, are integers of 1 or more, and may be the same as or different from each other.

Each of the compounds represented by Formulas 1 to 5 may have a number average molecular weight of 500 g/mol to 12,000 g/mol. When the range is satisfied, an increase in a surface roughness deviation may be suppressed, so that the gloss and flatness of the copper layer 11 may be improved.

The compounds represented by Formulas 1 to 5 may be prepared by polymerization or copolymerization using Diallyl Dimethyl Ammonium Chloride (DDAC). The compound represented by Formula 1 may be PAS-2451 (Mw 30,000 g/mol, from Nittobo). The compound represented by Formula 2 may be PAS-84 (Mw 20,000 g/mol, from Nittobo). The compound represented by Formula 3 may be PAS-2351 (Mw 25,000 g/mol, from Nittobo). The compound represented by Formula 4 may be PAS-A-1 (Mw 5,000 g/mol, from Nittobo), or PAS-A-5 (Mw 4,000 g/mol, from Nittobo). The compound represented by Formula 5 may be PAS-J-81 (Mw 180,000 g/mol, from Nittobo).

The additive may include a fourth additive for controlling the growth direction of the copper layer 11 and refining particles thereof.

The fourth additive may induce microcrystallines of the copper layer 11, so that the heat resistance, weldability, and tensile strength of the copper layer 11 may be improved.

The concentration of the fourth additive may be 0.1 ppm to 20 ppm, 0.1 ppm to 15 ppm, 0.1 ppm to 12 ppm, or 1 ppm to 10 ppm. When the range is satisfied, a rapid increase in the roughness of the copper layer 11 is suppressed, so that the phenomenon in which the strength of the copper foil 10 is lowered may be prevented.

The fourth additive may include a protein derivative. The protein derivative may include at least one of collagen, collagen peptide, and gelatin.

The weight average molecular weight of the protein derivative may be 1,000 g/mol to 10,000 g/mol, 1,000 g/mol to 10,000 g/mol, 1,000 g/mol to 10,000 g/mol, or 1,000 g/mol to 10,000 g/mol. When the range is satisfied, the surface flattening of the copper layer 11 may be improved, and the generation of bubbles and voids on the surface of the copper layer 11 due to an increase in the viscosity of the electrolyte solution 40 may be suppressed.

The content of hydrogen peroxide (H₂O₂) in the electrolyte solution 40 may be 1 ml/L to 10 ml/L, 1 ml/L to 9.5 ml/L, 1 ml/L to 9.2 ml/L, or 1 ml/L to 9 ml/L.

The concentration of silver (Ag) in the electrolyte solution 40 may be 0.1 ppm to 10 ppm, 0.1 ppm to 9.5 ppm, 0.1 ppm to 9 ppm, or 0.1 ppm to 8 ppm.

The concentration of cerium (Ce) in the electrolyte solution 40 may be 2 ppm to 10 ppm, 2 ppm to 9.5 ppm, 2 ppm to 9 ppm, or 2 ppm to 8 ppm.

The concentration of lead (Pb) in the electrolyte solution 40 may be 1 ppm to 20 ppm, 1 ppm to 19 ppm, 1 ppm to 18 ppm, or 1 ppm to 15 ppm.

The concentration of molybdenum (Mo) in the electrolyte solution 40 may be 25 ppm or less, 20 ppm or less, 15 ppm or less, or 0.1 ppm to 25 ppm.

The concentration of nickel (Ni) in the electrolyte solution 40 may be 15 ppm to 150 ppm, 15 ppm to 130 ppm, 15 ppm to 120 ppm, or 15 ppm to 100 ppm.

The concentration of tungsten (W) in the electrolyte solution 40 may be 0.3 ppm to 5 ppm, 0.3 ppm to 4.5 ppm, 0.3 ppm to 4.2 ppm, or 0.3 ppm to 4 ppm.

The concentration of cobalt (Co) in the electrolyte solution 40 may be 330 ppm or less, 320 ppm or less, 300 ppm or less, or 100 ppm to 330 ppm.

The concentration of iron (Fe) in the electrolyte solution 40 may be 300 ppm or less, 280 ppm or less, 250 ppm or less, or 0.1 ppm to 300 ppm.

The concentration of arsenic (As) in the electrolyte solution 40 may be 0.5 ppm to 5 ppm, 0.5 ppm to 4.5 ppm, 0.5 ppm to 4.2 ppm, or 0.5 ppm to 4 ppm.

The concentrations of silver, cerium, lead, molybdenum, nickel, tungsten, cobalt, iron and arsenic described above include all atoms present in ions and molecules.

When the range is satisfied, since the uniformity and strength of the crystal grains of a copper metal formed on the surface of the copper foil 10 may be improved, the generation of defects such as fracture, wrinkling, and cracks in the copper foil 10 may be suppressed.

When forming the copper layer 11, the flow rate of the electrolyte solution 40 supplied into the electrolytic bath 30 may be 46 m³/hour to 52 m³/hour, 46 m³/hour to 51 m³/hour, 47 m³/hour to 51 m³/hour, or 48 m³/hour to 51 m³/hour. By having the range, the texture coefficient [TC(311)] of the (311) plane of the copper layer at room temperature, which is condition (3) of the copper foil 10, may be controlled to be in the range of 0.15 to 1.65. In addition, the crystal orientation in the copper foil 10 may be controlled to secure mechanical flexibility and stress dispersion capability in a balanced manner, and as the electrolyte solution 40 is filtered during its circulation process, solid impurities present in the electrolyte solution 40 may be removed while the electroplating for forming the copper layer 11 is performed.

A flow rate deviation of the electrolyte solution 40 may be controlled to be 5% or less, 4% or less, 3% or less, or 2% or less per unit time (second). When the range is satisfied, the copper layer 11 may be uniformly formed, and a deviation in the weight of the manufactured copper foil 10 may be minimized.

To remove impurities from the surface of the copper layer 11, water washing may be performed in a washing tank. To remove impurities from the surface of the copper layer 11, acid cleaning may be performed, and then water cleaning may be performed to remove the acidic solution used for the acid cleaning.

The method of manufacturing the copper foil 10 may include a step of forming a protective layer 12 on the copper layer 11. The copper layer 11 may be immersed in an anticorrosion solution 70. The copper layer 11 may be guided by a guide roll disposed in the anticorrosion solution 70 when being immersed in the anticorrosion solution 70.

The anticorrosion solution 70 may include at least one of a chromium compound, a silane compound, and a nitrogen compound. The anticorrosion solution 70 may include a chromium compound.

When forming the protective layer 12 on the copper layer 11, a method of immersing the copper layer 11 in a potassium dichromate solution at room temperature for 1 to 30 seconds may be performed. The protective layer 12 may include a silane compound by silane treatment, and may include a nitrogen compound by nitrogen treatment. The copper foil 10 may be manufactured by forming the protective layer 12.

The concentration of chromium included in the anticorrosion solution 70 may be 0.5 g/L to 1.2 g/L, 0.6 g/L to 1.2 g/L, 0.6 g/L to 1.1 g/L, or 0.6 g/L to 1.0 g/L. The chromium concentration includes all chromium atoms existing in compounds, ions, and molecules.

Within the range, the chromium electrodeposition amount of the copper foil 10 may be controlled into the range of 1.2 mg/m² to 4.2 mg/m². In addition, since the number of active sites that can be chemically bonded with the active material on the surface of the copper foil 10 may be appropriately adjusted, a binding force between the copper layer 11 and the protective layer 12 may be relatively reduced, and the adhesion force between the copper foil 10 and the active material layer may be improved.

Hereinafter, the present disclosure is described in more detail based on Examples and Comparative Examples. However, the following Examples and Comparative Examples are only examples for explaining the present disclosure in more detail, and the present disclosure is not limited by the following Examples and Comparative Examples.

### Examples

### Example 1

A copper foil was manufactured using a foil-making machine including an electrolytic bath 30, a rotating cathode drum 60 disposed in the electrolytic bath 30, and a positive electrode plate 50 disposed apart from the rotating cathode drum 60.

The electrolyte solution 40 is a copper sulfate solution, the concentration of copper ions in the electrolyte solution 40 was 75 g/L, the concentration of sulfuric acid was 120 g/L, the temperature of the electrolyte solution 40 was set to 55 °C and the current density was set to 75 ASD (A/dm²). The flow rate of the electrolyte solution 40 supplied into the electrolytic bath 30 was controlled to 46 m³/hour, and the chlorine (Cl) concentration contained in the electrolyte solution 40 was maintained at 17 ppm.

8 ppm of bis-(3-sulfopropyl)-disulfide disodium salt (SPS), 2 ppm of polyethylene glycol (PEG), and 1 ppm of N-isopropylacrylamide (NIPA) were contained in the electrolyte solution 40.

The buffing speed of the rotating cathode drum 60 was set to 150 rounds/min, and a current was applied between the rotating cathode drum 60 and the anode plate 50 at a current density of 75 ASD to manufacture the copper layer 11. Next, the copper layer 11 was immersed in an anticorrosion solution 70 for about 2 seconds. The anticorrosion solution 70 contained chromium as a main component, and the concentration of the chromium was 0.5 g/L.

Next, a chromate treatment was performed on both surfaces of the copper layer 11 to manufacture the copper foil 10 on which a protective layer was formed.

### Examples 2 and 3 and Comparative Examples 1 to 6

Copper foils were manufactured under the same process conditions as in Example 1, except that compositions, contents, and process conditions were adjusted as described in Table 1 below.

**[Table 1]**

| Classificati on | Copp er (g/L) | Sulfur ic acid (g/L) | Chlori ne (ppm) | SPS (pp m) | PEG (pp m) | NIP A (pp m) | Chromiu m (g/L) | Flow rate of electroly te solution (m³/ hour) | Buffin g speed (round s/ min) |
|---|---|---|---|---|---|---|---|---|---|
| Example 1 | 75 | 120 | 17 | 8 | 2 | 1.0 | 0.5 | 46 | 150 |
| Example 2 | 75 | 120 | 17 | 8 | 2 | 3.5 | 0.5 | 52 | 250 |
| Example 3 | 75 | 120 | 17 | 8 | 2 | 7.0 | 0.5 | 49 | 350 |
| Comparati ve Example 1 | 75 | 120 | 17 | 8 | 2 | 0.9 | 0.5 | 49 | 350 |
| Comparati ve Example 2 | 75 | 120 | 17 | 8 | 2 | 3.6 | 0.5 | 49 | 350 |
| Comparati ve Example 3 | 75 | 120 | 17 | 8 | 2 | 3.5 | 0.5 | 49 | 145 |
| Comparati ve Example 4 | 75 | 120 | 17 | 8 | 2 | 3.5 | 0.5 | 49 | 355 |
| Comparati ve Example 5 | 75 | 120 | 17 | 8 | 2 | 3.5 | 0.5 | 45 | 350 |
| Comparati ve Example 6 | 75 | 120 | 17 | 8 | 2 | 3.5 | 0.5 | 53 | 350 |

### Experimental Examples

### Experimental Example 1 - Rku

Samples of each copper foil manufactured in Examples 1 to 3 and Comparative Examples 1 to 6 were prepared. The Rku (kurtosis) of the samples was calculated using a roughness tester from Mitsutoyo Corp. according to JIS B0601:2013. The results are shown in Table 2 below.

### Experimental Example 2 - Hardness

For each of the samples manufactured in Experimental Example 1, hardness was measured according to the following measurement conditions in accordance with ISO 14577. The results are shown in Table 2 below.

### [Measurement conditions]

- Measurement equipment: Nano Indenter G200 from Agilent Technologies Corp.
- Surface approach velocity (nm/S): 10
- Depth limit (nm): 1000
- Strain rate target (1/S): 0.05
- Frequency target (Hz): 45

### Experimental Example 3 - Texture coefficient [TC(311)]

For each of the samples prepared in Experimental Example 1, the texture coefficient of the crystal plane (311) of the copper layer constituting the copper foil was measured.

First, an XRD graph having peaks corresponding to n crystal planes was obtained by X-ray diffraction (XRD) analysis [target: copper K alpha 1, 2θ interval: 0.01°, 20 scan speed: 3°/min] in a diffraction angle (20) range of 30° to 95°. Here, n is 4.

Next, from the graph, the XRD diffraction intensity [I(hkl)] of each crystal plane (hkl) was obtained. In addition, the XRD diffraction intensity [Iₒ(hkl)] was obtained according to the value presented in JCPDS 04-0836 of the Joint Committee on Powder Diffraction Standards (JCPDS).

Next, the arithmetic mean value of I(hkl)/Iₒ(hkl) of the n crystal planes was calculated, and the I(311)/Iₒ(311) of the (311) plane was divided by the arithmetic mean value, thereby calculating the texture coefficient [TC(311)] of the (311) plane of the copper layer 11.

Specifically, the texture coefficient [TC(311)] of the (311) plane of the copper layer 11 was calculated according to the following equation, and the results are shown in Table 2 below. $TC \left(hkl\right) = \frac{I \left(311\right) / {I}_{0} \left(311\right)}{\frac{1}{N} {\sum }_{i = 1}^{N} I {\left(hkl\right)}_{i} / {I}_{0} {\left(hkl\right)}_{i}}$

### Experimental Example 4 - Amount of chromium (Cr) electrodeposited

After one surface of each of the copper foils manufactured in Examples 1 to 3 and Comparative Examples 1 to 6 was masked with tape, a sample of 10 cm × 10 cm size was prepared. After one surface of the sample was dissolved by an aqueous nitric acid solution (water:nitric acid = 1:1) at 70°C for a specified duration of 30 minutes, ensuring complete dissolution of the targeted surface layer. The resulting dissolution liquid was then diluted with water to prepare 50 ml of dilution solution with a precise dilution factor of 10 times.

Next, the diluted solution was analyzed by Atomic Absorption Spectrometry (AAS) under a temperature condition of 25±3 °C, and the chromium electrodeposition amount was measured three times.

### Experimental Example 5 - Reliability evaluation

An active material slurry was applied to each of the copper foils manufactured in Examples 1 to 3 and Comparative Examples 1 to 6. The active material slurry was mixed with 2 parts by weight of styrene-butadiene rubber (SBR) and 2 parts by weight of carboxymethyl cellulose (CMC) with respect to 100 parts by weight of graphite. The active material slurry was uniformly applied on the copper foil in a roll-to-roll method and in a Machine Direction (MD) and then dried. The coating amount of the active material slurry was about 16 mg/cm², and the thickness was about 100 *µ*m.

After the active material slurry was dried, a roll press process was performed under the conditions of a roll gap of 6 *µ*m, a speed of 1 m/min, a linear pressure of 1,000 kgf/cm, and a pressure of 2,500 kg, whereby a negative electrode on which an active material layer having a density of about 1.5 g/cm³ was formed was manufactured.

For each of the negative electrodes, a lithium manganese aluminum-based active material was used as counter electrode (positive electrode). A polypropylene sheet with a thickness of 0.1 mm was used as a separator, and an electrolyte solution, prepared by dissolving 1 M of LiPF₆ in a solvent in which ethylene carbonate and ethyl methyl carbonate were mixed in a volume ratio of 3:7, was used to manufacture a secondary battery.

Each secondary battery was charged at a constant current of 0.1C until the voltage reached 0.01V, and a process of discharging at a constant current of 0.1C until the voltage reached 1.5V was performed 3 times to stabilize the cell. Next, each secondary battery was charged at a constant current of 0.5C until the voltage reached 0.01V, and a process of discharging at a constant current of 0.5C until the voltage reached 1.0V was performed 100 times. After 100 charge/discharge cycles were performed, the secondary battery was disassembled, and it was observed whether wrinkles and/or tearing occurred on the copper foil. The results are shown in Table 3 below.

**[Table 2]**

| Classification | Rku | Hardness (GPa) | Texture coefficient (311) |
|---|---|---|---|
| Example 1 | 1.2 | 0.80 | 0.15 |
| Example 2 | 3.1 | 2.10 | 0.90 |
| Example 3 | 5.9 | 3.40 | 1.65 |
| Comparative Example 1 | 1.1 | 2.10 | 0.90 |
| Comparative Example 2 | 6.0 | 2.10 | 0.90 |
| Comparative Example 3 | 3.1 | 0.70 | 0.90 |
| Comparative Example 4 | 3.1 | 3.50 | 0.90 |
| Comparative Example 5 | 3.1 | 2.10 | 0.14 |
| Comparative Example 6 | 3.1 | 2.10 | 1.66 |

**[Table 3]**

| Classification | Condition (1)¹⁾ compliance | Condition (2)²⁾ compliance | Condition (3)³⁾ compliance | Reliability evaluation | |
|---|---|---|---|---|---|
| | | | | Wrinkles | Tearing |
| Example 1 | ○ | ○ | ○ | None | None |
| Example 2 | ○ | ○ | ○ | None | None |
| Example 3 | ○ | ○ | ○ | None | None |
| Comparative Example 1 | × | ○ | ○ | Occurred | None |
| Comparative Example 2 | × | ○ | ○ | Occurred | Occurred |
| Comparative Example 3 | ○ | × | ○ | Occurred | None |
| Comparative Example 4 | ○ | × | ○ | None | Occurred |
| Comparative Example 5 | ○ | ○ | × | None | Occurred |
| Comparative Example 6 | ○ | ○ | × | Occurred | None |
| 1) Condition (1): 1.2 ≤ Rku ≤ 5.9 | | | | | |
| 2) Condition (2): 0.8 ≤ Hardness ≤ 3.4 | | | | | |
| 3) Condition (3): 0.15 ≤ Texture coefficient [TC(311)] ≤ 1.65 | | | | | |

According to Tables 1 to 3, the copper foils according to Examples 1 to 3 satisfies all of the respective conditions classified by the Rku, the hardness, and the texture coefficient [TC(311)]. Due to these characteristics, the crystal orientation of the copper layer constituting each of the copper foils can be controlled, and the residual stress inside the copper foil can be reduced. As a result, since wrinkles and tearing of the copper foil did not occur during the manufacturing process of the copper foil and the process of being used as a material for a secondary battery, excellent product reliability could be confirmed.

In the present disclosure, so as to realize a copper foil with a thin thickness while preventing defects such as wrinkles and tearing during the manufacturing and use processes, independent physical properties such as roughness Rku (kurtosis), hardness, and texture coefficient [TC(311)] are controlled in a technically interlinked combination.

As the Rku satisfies condition (1), the concentration of the protrusion profile on the surface of the copper foil is appropriately controlled, so that defects such as wrinkles and/or tearing, which can occur during slip or roll contact in a copper foil-manufacturing process, can be suppressed. In addition, since a fine uneven structure of an appropriate level exists on the surface of the copper foil, the interfacial adhesion to an active material can be improved, and since excessive protrusion from the surface of the copper foil is suppressed, damage due to contact with rolls or foreign substances can be reduced.

As the hardness satisfies condition (2), the mechanical rigidity of the copper foil can be stably secured in accordance with process suitability. In addition, since the copper foil is not excessively stretched, the occurrence of wrinkles due to local pressure during the manufacturing process can be prevented, and even in a situation (tension hunting) where the tensile load is not constant and fluctuates irregularly, the copper foil can react flexibly, so that the tensile force can be evenly distributed without fracture.

As the texture coefficient [TC(311)] satisfies condition (3), the crystal orientation in the copper foil is controlled, so that mechanical flexibility and stress dispersion capability can be secured in a balanced manner. In addition, dislocation movement between crystal grains is possible, which is effective for local stress dispersion, and excessive hardening of the crystal structure is prevented, so that a tearing phenomenon during a roll-to-roll process may be prevented.

In the copper foil satisfying conditions (1) to (3), the surface roughness structure, mechanical rigidity, and crystal orientation characteristics can be harmonized with each other, so that the coating uniformity of the active material layer, the interfacial adhesion force, and the structural stability of an electrode can be improved.

As described above, the Rku, hardness, and texture coefficient satisfying conditions (1) to (3) can contribute to improving the stability of a copper foil-manufacturing process and electrode-manufacturing process and achieving the high reliability of a battery, through their mutually complementary technical synergy.

### [Description of Symbols]

10: copper foil
11: copper layer
12: protective layer
15: negative electrode active material layer
20: positive electrode current collector
25: positive electrode active material layer
30: electrolytic bath
40: electrolyte solution
50: positive electrode plate
51: first positive electrode plate
52: second positive electrode plate
60: rotating cathode drum
70: anticorrosion solution
100: negative electrode
200: positive electrode
300: electrolyte
400: separator
1000: secondary battery

## Claims

1. A copper foil, comprising a copper layer,
wherein the copper foil satisfies conditions (1) to (3) below:
- Condition (1): A Rku (kurtosis) of the copper foil according to JIS B0601:2013 is 1.2 to 5.9.
- Condition (2): A hardness of the copper foil according to ISO 14577 is 0.8 GPa to 3.4 GPa.
- Condition (3): A texture coefficient [TC(311)] of a (311) plane of the copper layer at room temperature is 0.15 to 1.65.

2. The copper foil according to claim 1, wherein the copper foil comprises a first surface and a second surface opposite to the first surface,
wherein an Rku difference according to Equation 1 below is 1 or less: $Rku difference = \left|First Rku-Second Rku\right|$
where the first Rku is an Rku of the first surface, and the second Rku is an Rku of the second surface.

3. The copper foil according to claim 1 or 2, wherein an amount of chromium (Cr) electrodeposited on the surface of the copper foil is 1.2 mg/m² to 4.2 mg/m².

4. The copper foil according to any one of the preceding claims, wherein the copper foil has a yield strength of 23 kgf/mm² (225.6 N/mm²) to 57 kgf/mm² (559.0 N/mm²) measured at room temperature according to IPC-TM-650, and/or
wherein the copper foil has an elongation of 3 % to 18 % measured at room temperature according to IPC-TM-650.

5. The copper foil according to claim 4, wherein the copper foil has a Resistance Index (RI) of 70 to 150 according to Equation 2 below: $RI \left(unit omitted\right) = Yield strength \left(kgf/{mm}^{2}\right) \times Elongation \left(%\right)$

6. The copper foil according to any one of the preceding claims, wherein the copper foil has a tensile strength of 29 kgf/mm² (284.4 N/mm²) to 65 kgf/mm² (637.4 N/mm²) at room temperature according to IPC-TM-650.

7. The copper foil according to any one of the preceding claims, wherein the copper foil comprises a protective layer formed on at least one surface of the copper layer,
wherein the protective layer comprises at least one of a chromium compound, a silane compound, and a nitrogen compound.

8. The copper foil according to claim 1, wherein the copper foil has a thickness of 3 *µ*m to 20 *µ*m.

9. An electrode, comprising:
a current collector comprising a copper foil according to any one of the preceding claims; and
an active material layer formed on at least one surface of the current collector.

10. The electrode according to claim 9, wherein a ratio of a thickness of the current collector to a total thickness of the electrode is 1 % to 12 %.

11. A secondary battery, comprising:
a negative electrode according to claim 9 or 10;
a positive electrode;
an electrolyte; and
a separator interposed between the negative electrode and positive electrode.
